# FASCICULE DE BREVET EUROPEEN

(11) **EP 3 414 788 B1**
(45) Date de publication et mention de la délivrance du brevet: **20.11.2019**
(21) Numéro de dépôt: 17704017.7
(22) Date de dépôt: 10.02.2017
(51) Int. Cl.: H01M 4/62, H01M 4/60, H01M 4/485, H01M 4/131, H01M 4/13, H01M 10/052, H01M 10/48, H01M 4/133, H01M 4/136, H01M 4/38, H01M 4/58, H01M 4/587, H01M 4/66

(54) **ÉLECTRODE ÉLECTROCHROME POUR DISPOSITIF DE STOCKAGE D'ÉNERGIE**
ELEKTROCHROME ELEKTRODE FÜR ENERGIESPEICHER
ELECTROCHROMIC ELECTRODE FOR ENERGY STORAGE DEVICE

(30) Priorité: 12.02.2016 FR 1651173
(43) Date de publication de la demande: 19.12.2018
(73) Titulaire: Commissariat à l'Energie Atomique et aux Energies Alternatives, 75015 Paris (FR)
(72) Inventeur: IORDACHE, Adriana, 38000 Grenoble (FR); PICARD, Lionel, 38170 Seyssinet-Pariset (FR); SKRZYPSKI, Jonathan, 89250 Gurgy (FR); SOLAN, Sébastien, 38170 Seyssinet-Pariset (FR)
(74) Mandataire: Brevalex
(86) Numéro de dépôt international: PCT/EP2017/053055
(87) Numéro de publication internationale: WO 2017/137591

(56) Documents cités:
- EP-A1- 1 870 949
- DE-A1- 3 935 805
- KR-B1- 101 508 480
- US-A1- 2011 070 488
- US-A1- 2012 164 539
- US-A1- 2013 280 604
- M. VEERABABU ET AL: "Improved electrochemical performance of lithium/sodium perylene-3,4,9,10-tetracarboxylate as an anode material for secondary rechargeable batteries", INTERNATIONAL JOURNAL OF HYDROGEN ENERGY, vol. 40, no. 43, 9 octobre 2015 (2015-10-09), pages 14925-14931, XP055294378, GB ISSN: 0360-3199, DOI: 10.1016/j.ijhydene.2015.09.001
- L. FÉDÈLE ET AL: "Hyper-conjugated lithium carboxylate based on a perylene unit for high-rate organic lithium-ion batteries", JOURNAL OF MATERIALS CHEMISTRY A: MATERIALS FOR ENERGY AND SUSTAINABILITY, vol. 2, no. 43, 18 septembre 2014 (2014-09-18), pages 18225-18228, XP055294388, GB ISSN: 2050-7488, DOI: 10.1039/C4TA02293A
- M. ARMAND ET AL: "Conjugated dicarboxylate anodes for Li-ion batteries", NATURE MATERIALS, vol. 8, no. 2, 1 février 2009 (2009-02-01) , pages 120-125, XP055127282, ISSN: 1476-1122, DOI: 10.1038/nmat2372
- J. SCARMINIO ET AL: "STRESS AND ELECTROCHROMISM INDUCED BY LI INSERTION IN CRYSTALLINE AND AMORPHOUS V2O5 THIN FILM ELECTRODES", ELECTROCHIMICA ACTA, vol. 38, no. 12, 1 août 1993 (1993-08-01), pages 1637-1642, XP000415608, ISSN: 0013-4686, DOI: 10.1016/0013-4686(93)85053-2

## Description

### DOMAINE TECHNIQUE

La présente invention a trait à de nouvelles électrodes pour un dispositif de stockage d'énergie, en particulier pour batterie au lithium comprenant, comme ingrédients, un matériau actif spécifique et un matériau conducteur de l'électricité spécifique, en vue notamment de pouvoir visualiser l'état de charge de ladite électrode par simple changement de couleur de cette dernière.

L'invention a également trait à un dispositif de stockage d'énergie comprenant au moins une telle électrode.

Le domaine de l'invention peut être défini comme celui des dispositifs de stockage d'énergie, en particulier celui des batteries au lithium.

### ÉTAT DE LA TECHNIQUE ANTÉRIEURE

Les dispositifs de stockage d'énergie sont classiquement des batteries électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparées par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des batteries souscrivant à ce principe actuellement les plus usitées sont, en particulier, les batteries au lithium, telles que les batteries lithium-ion.

D'un point de vue fonctionnel, les batteries lithium-ion reposent sur le principe de l'intercalation-désintercalation ou complexation-décomplexation du lithium au sein des matériaux constitutifs des électrodes des cellules électrochimiques de la batterie (ces matériaux pouvant être également désignés sous la dénomination de matériaux actifs).

Plus précisément, la réaction à l'origine de la production de courant (c'est-à-dire lorsque la batterie est en mode de décharge) met en jeu le transfert, par l'intermédiaire d'un électrolyte conducteur d'ions lithium, de cations lithium provenant d'une électrode négative qui viennent s'intercaler dans le réseau accepteur de l'électrode positive, tandis que des électrons issus de la réaction à l'électrode négative vont alimenter le circuit extérieur, auquel sont reliées les électrodes positive et négative.

Parmi les matériaux actifs susceptibles d'entrer dans la constitution de l'une au moins des électrodes, il peut s'agir de composés inorganiques, qui sont susceptibles d'accueillir dans leur réseau des ions lithium en processus de charge ou de décharge selon la polarité des électrodes; ou encore de composés organiques qui sont susceptibles par une réaction d'oxydoréduction de complexer lesdits ions lithium.

Ces matériaux actifs sont généralement utilisés en association avec un additif conducteur de l'électricité, tel que des particules de carbone (en particulier, du noir de carbone) et également avec un additif assurant la cohésion de l'électrode, dans laquelle sont inclus le matériau actif et l'additif conducteur, un tel additif pouvant être un liant polymérique, l'association de ces ingrédients aboutissant à un mélange opaque et dense.

Avec de telles électrodes comportant un tel mélange, il n'est ainsi pas possible de procéder à un suivi colorimétrique pour déterminer l'état de charge de l'électrode, lorsqu'un changement d'état de charge se manifeste par un changement de couleur du matériau actif, un tel changement intervenant notamment avec des matériaux électrochromes, du fait que l'additif conducteur de l'électricité masque le changement de couleur du matériau actif.

Ainsi, un besoin se fait ressentir pour estimer l'état de charge d'une batterie de manière simple par un simple suivi colorimétrique de celle-ci, notamment dans le domaine des équipements électroniques portables.

Ce besoin est désormais comblé par les auteurs de la présente invention, qui ont découvert, qu'en associant à un matériau actif spécifique un additif conducteur de l'électricité spécifique dans une électrode, il est devenu possible de procéder à l'estimation de l'état de charge de cette électrode par un simple suivi colorimétrique de celle-ci.

Le document US 2012/164539 A1 décrit une batterie au lithium incluant (a) une électrode positive (cathode) comprenant un premier matériau fonctionnel ayant une première surface capable de capturer ou de stocker des ions lithium, (b) une électrode négative (anode) comprenant un second matériau fonctionnel ayant une seconde surface capable de capturer ou de stocker des ions lithium, (c) un séparateur poreux disposé entre ces deux électrodes, et (d) un électrolyte contenant des ions lithium, en contact physique avec les deux électrodes. Selon un exemple préféré, le matériau fonctionnel de la cathode et/ou de l'anode est constitué d'un matériau électrochrome organique, tel que le téréphtalate de lithium (LiPTCA) ou le dianhydride de l'acide pérylène-3,4,9,10-tétracarboxylique (PTCDA).

L'utilisation de dérivés d'acides di- ou tétracarboxyliques conjugués comme matériau actif d'électrode pour batteries au lithium, est également décrite dans les publications "International Journal of Hydrogen Energy, vol. 40, no. 43, 9 octobre 2015, pages 14925-14931", "Journal of Materials Chemistry A: Materials for Energy and Sustainability, vol. 2, no. 43, 18 septembre 2014, pages 18225-18228", et "Nature Materials, vol. 8, no. 2, 1er février 2009, pages 120-125", ainsi que dans les documents US 2013/280604 A1 et DE 39 35 805 A1.

Le document EP 1 870 949 A1 et la publication "Electrochimica Acta, vol. 38, no. 12, 1er août 1993, pages 1637-1642" se réfèrent quant à eux à des matériaux électrochromes inorganiques utilisés comme matière active d'électrode pour accumulateurs au lithium, tels que l'oxyde de titane de structure de type bronze ou le pentoxyde de vanadium.

Les documents KR 101 508 480 B1 et US 2011/070488 A1 divulguent l'utilisation de nanofils métalliques, tels que des nanofils d'argent, de nickel, de cuivre ou de zinc, comme additif de conduction électronique pour des électrodes d'accumulateurs au lithium.

### EXPOSÉ DE L'INVENTION

Ainsi, l'invention a trait à une électrode pour dispositif de stockage d'énergie comprenant, comme matériau actif, un matériau électrochrome et comme additif conducteur de l'électricité, des nanofils métalliques, qui est déposée sur un substrat transparent.

Par matériau actif, on entend, classiquement, dans ce qui précède et ce qui suit, le matériau qui est directement impliqué dans les réactions d'insertion et de désinsertion et/ou complexation et de décomplexation des ions intervenant dans le dispositif de stockage d'énergie, ces ions étant des ions lithium, lorsque le dispositif est une batterie au lithium.

En associant un matériau actif du type matériau électrochrome à des nanofils métalliques, comme additif conducteur de l'électricité, il est possible de suivre les changements de couleur dudit matériau électrochrome en fonction de l'état de charge de l'électrode, sans que ces changements ne soient masqués par l'additif conducteur de l'électricité, comme cela est le cas lorsque celui-ci est notamment sous forme de noir de carbone.

Selon la présente invention, l'électrode est déposée sur un substrat transparent, ce qui permet d'observer l'évolution de sa couleur en fonction de son état de charge. Ce substrat peut assurer la fonction de collecteur de courant.

Le substrat transparent peut être en verre ou en matériau plastique souple, éventuellement recouvert d'une couche conductrice de l'électricité, par exemple, une couche en céramique conductrice de l'électricité, telle qu'une couche en oxyde d'indium et d'étain.

Le matériau actif, dans le cadre de l'invention, est un matériau électrochrome, c'est-à-dire un matériau apte à changer de couleur lorsqu'une charge électrique lui est appliquée, ce qui signifie, dans le contexte de fonctionnement du dispositif de stockage d'énergie, lorsque ce matériau actif est en état de décharge.

Ce matériau électrochrome peut être un matériau inorganique tel que du graphite, du TiO₂ sous forme bronze (désigné, parfois, par la dénomination TiO₂-B), un oxyde de vanadium, tel que V₂O₅, V₃O₇, un oxyde mixte de lithium et de titane, tel que Li₄Ti₅O₁₂ (désigné, parfois, par l'abréviation LTO), des phosphates de lithium, tels que LiFePO₄ (désigné, parfois, par l'abréviation LFP).

Ce matériau peut être également un composé organique et, plus spécifiquement un composé organique comprenant au moins un groupe accepteur d'électrons, tel que, par exemple, un groupe carbonyle.

Ce type de composé, du fait qu'il comporte un groupe accepteur d'électrons et donc apte à être réduit, peut ainsi entrer dans la constitution d'une électrode positive, lorsque le dispositif de stockage d'énergie est en processus de décharge ou dans la constitution d'une électrode négative, lorsque le dispositif de stockage d'énergie est en processus de charge.

En particulier, un tel composé peut être un composé aromatique, tel qu'un composé pérylène, comportant au moins un groupe accepteur d'électrons, tel qu'un groupe carbonyle ou un groupe imide, un composé spécifique répondant à cette définition étant le dianhydridepérylène-3,4,9,10-tétracarboxylique (symbolisé par l'abréviation PTCDA) répondant à la formule (I) suivante :

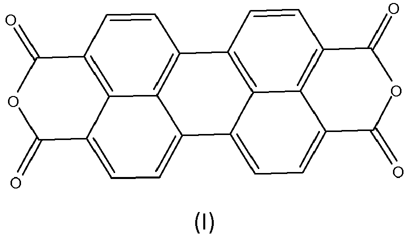

Le matériau actif peut être également un composé organique comportant au moins un groupe donneur d'électrons, tel que, par exemple, un groupe carboxylate.

Ce type de composé, du fait qu'il comporte un groupe donneur d'électrons et donc apte à être oxydé, peut ainsi entrer dans la constitution d'une électrode négative, lorsque le dispositif de stockage d'énergie est en processus de décharge ou dans la constitution d'une électrode positive, lorsque le dispositif de stockage d'énergie est en processus de charge.

Plus spécifiquement, il peut s'agir d'un composé aromatique, tel qu'un composé pérylène ou phénylène, comportant au moins un groupe donneur d'électrons, tel qu'un groupe carboxylate, et plus particulièrement un groupe carboxylate lithié, des composés spécifiques répondant à cette définition répondant à l'une des formules (II) ou (III) suivantes :

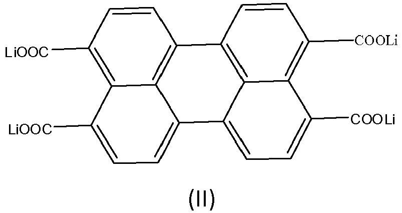

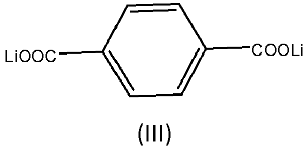

Avantageusement, le matériau électrochrome est compris dans l'électrode à raison de 45 à 99%, de préférence, de 80% à 98% en masse par rapport à la masse totale de l'électrode.

Comme mentionné ci-dessus, les électrodes de l'invention comprennent, également, comme additif conducteur de l'électricité, des nanofils métalliques.

Dans ce qui précède et ce qui suit, on entend par « *nanofil* », un fil dont l'épaisseur est comprise entre 1 et 100 nanomètres mais dont la longueur peut, elle, aller jusqu'à 10 micromètres.

Outre le fait que les nanofils ne masquent pas les changements de couleur du matériau électrochrome, ils permettent d'assurer une bonne conduction électronique et présentent des seuils de percolation très faibles (de l'ordre du pourcentage) au sein des électrodes.

Ces nanofils métalliques peuvent être des nanofils en métal choisi parmi le cuivre, le nickel, l'argent, l'or, le platine, le titane, le palladium, le zinc, l'aluminium et les alliages de ceux-ci, le métal étant avantageusement choisi en fonction de la gamme de potentiels de travail du matériau actif.

Ainsi, à titre d'exemples :
- le cuivre, le nickel et l'argent sont particulièrement adaptés pour un matériau actif présentant un potentiel électrochimique allant de 0 à 3 V vs. Li°/Li+;
- l'or est particulièrement adapté pour un matériau actif présentant un potentiel électrochimique allant de 1 à 4,5 V vs. Li⁰/Li⁺; et
- le platine est particulièrement adapté pour un matériau actif présentant un potentiel électrochimique allant de 0 à 4,5 V vs. Li⁰/Li⁺.

Plus spécifiquement, les nanofils peuvent être des nanofils en cuivre ou des nanofils en or.

D'un point de vue géométrique, ils peuvent présenter, avantageusement, un facteur de forme, correspondant au rapport de la longueur du nanofil sur son diamètre, allant de 10 à 1000000, par exemple, supérieur à 30.

Avantageusement, les nanofils sont compris dans l'électrode à raison de 0,1 à 20%, de préférence, de 0,1 à 6% en masse par rapport à la masse totale de l'électrode.

En outre, les électrodes de l'invention peuvent comprendre un liant, comme un liant polymérique, tel que du polyfluorure de vinylidène (connu sous l'abréviation PVDF), un mélange comprenant du carboxyméthylcellulose (connu sous l'abréviation CMC) avec un latex du type styrène-butadiène (connu sous l'abréviation SBR) ou avec de l'acide polyacrylique (connu sous l'abréviation PAA), ce liant contribuant à améliorer la tenue de l'électrode.

Aussi, d'un point de vue structural, l'électrode peut se présenter sous forme d'un matériau composite comprenant une matrice en liant(s) polymérique(s), au sein de laquelle sont dispersées des charges constituées par le matériau actif et les nanofils métalliques.

Les électrodes de l'invention sont destinées à entrer dans la constitution de dispositifs de stockage d'énergie, telles que :
- des batteries fonctionnant avec des ions alcalins, comme les batteries au lithium, les batteries au sodium ;
- des batteries fonctionnant avec des ions alcalino-terreux, comme les batteries au magnésium ;
- des batteries fonctionnant avec des ions organiques.

Aussi, l'invention a trait également à dispositif de stockage d'énergie, telle qu'une batterie au lithium, comprenant au moins une cellule électrochimique comprenant deux électrodes de polarité opposée, respectivement une électrode positive et une électrode négative, séparées par un électrolyte, l'une au moins des électrodes étant une électrode telle que définie ci-dessus, à savoir une électrode comprenant, comme matériau actif, un matériau électrochrome et comme additif conducteur de l'électricité, des nanofils métalliques.

Les caractéristiques définies ci-dessus pour les électrodes de l'invention peuvent être reprises pour le compte des dispositifs de stockage d'énergie comprenant de telles électrodes.

Par exemple, lorsque le matériau électrochrome est un composé organique comprenant au moins un groupe attracteur d'électrons, l'électrode de l'invention peut être une électrode positive, c'est-à-dire une électrode qui fait office de cathode (donc est le siège d'une réduction), quand le générateur débite du courant (c'est-à-dire lorsqu'il est en processus de décharge) ou peut être une électrode négative, qui fait office de cathode (donc est le siège d'une réduction), quand le générateur est en processus de charge.

A titre d'exemples, lorsque l'électrode positive comprend, comme matériau électrochrome, un composé organique comprenant au moins un groupe attracteur d'électrons, l'électrode négative peut être notamment une électrode en lithium métallique.

Chacune des électrodes est généralement en contact avec un collecteur de courant.

En particulier, le collecteur de courant peut être, avantageusement, pour l'électrode comportant, comme matériau actif, un matériau électrochrome et, comme additif conducteur de l'électricité, des nanofils métalliques, un substrat transparent sur lequel l'électrode peut être déposée, ce substrat transparent pouvant être, par exemple, un substrat en verre ou en matériau plastique souple, éventuellement recouvert d'une couche conductrice de l'électricité, par exemple, une couche en céramique conductrice de l'électricité, telle qu'une couche en oxyde d'indium et d'étain.

Le collecteur de courant peut se présenter, également sous forme d'une feuille ou grille métallique, par exemple, en cuivre ou en aluminium.

Les deux électrodes de polarité opposée (à savoir, l'électrode positive et l'électrode négative) sont séparées par un électrolyte, et plus spécifiquement, un électrolyte conducteur d'ions, par exemple d'ions lithium (lorsque le dispositif est une batterie au lithium), d'ions sodium (lorsque le dispositif est une batterie au sodium), d'ions magnésium (lorsque le dispositif est une batterie au magnésium) ou d'ions organiques (lorsque le dispositif est une batterie fonctionnant avec des ions organiques).

Cet électrolyte conducteur d'ions peut être un électrolyte liquide, comprenant au moins un sel dans un ou plusieurs solvants, par exemple, un sel de lithium (lorsque le dispositif est une batterie au lithium), un sel de sodium (lorsque le dispositif est une batterie au sodium), un sel de magnésium (lorsque le dispositif est une batterie au magnésium) ou un sel comprenant un ion organique (lorsque le dispositif est une batterie fonctionnant avec des ions organiques).

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP), du 4,5-dicyano-2-trifluorométhylimidazolide de lithium (connu sous l'abréviation LiTDI).

A titre d'exemples de solvants, on peut citer :
- les solvants organiques polaires aprotiques, par exemple, un solvant polaire aprotique choisi parmi les solvants carbonates, les solvants éthers, les solvants esters, les solvants sulfones et les solvants nitriles ; ou encore
- les solvants protiques, tels que l'eau.

En outre, l'électrolyte peut être amené à imbiber au moins un élément séparateur disposé entre les deux électrodes de la batterie.

En variante, l'électrolyte conducteur d'ions peut être un électrolyte polymère ou un électrolyte gélifié.

A titre d'exemple, un dispositif conforme à l'invention est une batterie au lithium comprenant une cellule électrochimique comprenant :
- une électrode conforme à l'invention, à savoir, plus spécifiquement, une électrode positive comprenant, comme matériau électrochrome, un composé organique de formule (I) telle que définie ci-dessus, comme additif conducteur de l'électricité, des nanofils de cuivre et un liant polymère, par exemple, du polyfluorure de vinylidène ;
- une électrode négative en lithium métallique ; et
- un électrolyte disposé entre ladite électrode positive et ladite électrode négative, ledit électrolyte comprenant un sel de lithium et au moins un solvant organique de la famille des carbonates.

Plus spécifiquement, l'électrolyte peut comprendre un sel de lithium LiPF₆ et un mélange de solvants carbonates, par exemple, un mélange ternaire comprenant du carbonate d'éthylène, du carbonate de diméthyle et du carbonate d'éthyle et de méthyle.

Un autre exemple conforme à l'invention est une batterie au lithium comprenant une cellule électrochimique, laquelle cellule électrochimique comprend :
- une électrode conforme à l'invention, à savoir, plus spécifiquement, une électrode négative comprenant, comme matériau électrochrome, un composé organique de formule (I) telle que définie ci-dessus, comme additif conducteur de l'électricité, des nanofils de cuivre et un liant polymère, par exemple, du polyfluorure de vinylidène ;
- une électrode positive comprenant, comme matériau actif, du LiFePO₄ ; et
- un électrolyte disposé entre ladite électrode positive et ladite électrode négative, ledit électrolyte comprenant un sel de lithium et au moins un solvant organique de la famille des carbonates.

Enfin, un autre exemple conforme à l'invention est une batterie au lithium comprenant une cellule électrochimique comprenant :
- une électrode conforme à l'invention, à savoir, plus spécifiquement, une électrode positive comprenant, comme matériau électrochrome, du Li₄Ti₅O₁₂, comme additif conducteur de l'électricité, des nanofils de cuivre et un liant polymère, par exemple, du polyfluorure de vinylidène ;
- une électrode négative comprenant, comme matériau actif, du lithium métallique ; et
- un électrolyte disposé entre ladite électrode positive et ladite électrode négative, ledit électrolyte comprenant un sel de lithium et au moins un solvant organique de la famille des carbonates.

Avantageusement, les dispositifs de l'invention sont conditionnés dans une enveloppe transparente, permettant ainsi de visualiser l'électrode comprenant un matériau électrochrome et ainsi l'évolution de sa couleur en fonction de l'état de charge de l'électrode concernée. On précise que l'enveloppe entoure les éléments constitutifs de la batterie, à savoir, les électrodes et l'électrolyte.

Cette enveloppe transparente peut être, par exemple, en polyéthylène, en polytéréphtalate d'éthylène ou en polypropylène.

Les dispositifs de l'invention sont particulièrement adaptés pour les domaines d'application, dans lesquels la visualisation directe de l'état de charge des batteries constitue un atout, tel que cela est le cas du domaine des équipements électroniques portables, tels que la téléphonie mobile, les textiles techniques, l'horlogerie.

Enfin, l'invention a enfin trait à l'utilisation de nanofils métalliques dans une électrode pour dispositif de stockage d'énergie, tel qu'une batterie au lithium, comprenant, comme matériau actif, un matériau électrochrome, pour visualiser l'état de charge de ladite électrode par changement de couleur de celle-ci.

Les caractéristiques des nanofils métalliques, de l'électrode et du matériau électrochrome définies ci-dessus peuvent être reprises pour le compte de cette utilisation.

D'autres caractéristiques apparaîtront mieux à la lecture du complément de description qui suit, lequel se rapporte à un exemple de réalisation d'électrodes et de batteries conformes à l'invention.

Bien entendu, l'exemple qui suit n'est donné qu'à titre d'illustration de l'objet de l'invention et ne constitue, en aucun cas, une limitation de cet objet.

### BRÈVE DESCRIPTION DES DESSINS

La figure 1 est une représentation, en vue éclatée, d'une batterie conforme à l'invention.
La figure 2 est un graphique illustrant des courbes de charge-décharge (soit l'évolution du potentiel E (en V vs. Li⁺/Li°) en fonction de la capacité spécifique C (en mAh.g⁻¹) avec deux batteries conformes à l'invention et une batterie non conforme à l'invention.
La figure 3 est un graphique illustrant une courbe de cyclage (soit l'évolution de l'intensité I (en mA) en fonction du potentiel E (en V vs. Li⁺/Li°)) obtenue, par voltampérométrie cyclique, avec une batterie conforme à l'invention.
La figure 4 est une courbe de cyclage (soit l'évolution de l'intensité I (en mA) en fonction du potentiel E (en V vs. PTCDA)) obtenue, par voltampérométrie cyclique, avec la batterie de l'exemple 2.
La figure 5 est un graphique illustrant des courbes de charge-décharge (soit l'évolution du potentiel E (en V vs. Li⁺/Li°) en fonction de la capacité C (en mAh)) avec la batterie de l'exemple 2.
La figure 6 est un graphique illustrant des courbes de charge-décharge (soit l'évolution du potentiel E (en V vs. Li⁺/Li°) en fonction de la capacité spécifique C (en mAh.g⁻¹)) avec la batterie de l'exemple 3.
La figure 7 est une courbe illustrant l'évolution de la capacité spécifique C (en mAh/g) en fonction du nombre de cycles N pour la batterie de l'exemple 3.

### EXPOSÉ DÉTAILLÉ DE MODES DE RÉALISATION PARTICULIERS

### EXEMPLE 1

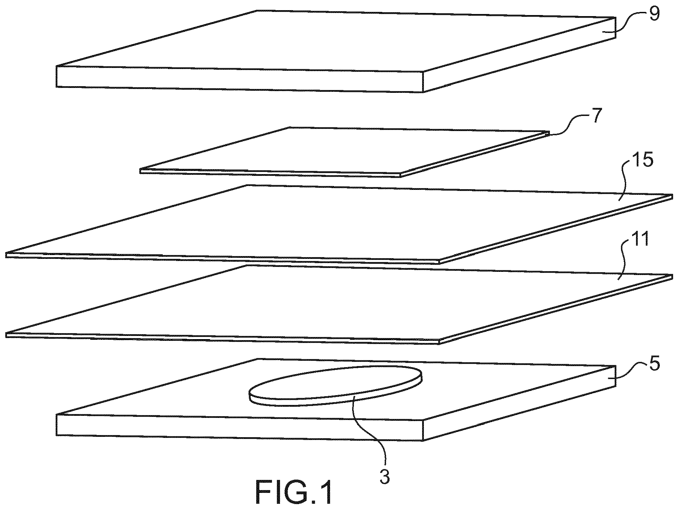

Cet exemple illustre la préparation de deux batteries conformes à l'invention, chacune de ces batteries comprenant, comme illustré sur la vue éclatée de la figure 1 jointe en annexe, les éléments suivants :
- une électrode positive 3 comprenant, comme matériau actif, du dianhydridepérylène-3,4,9,10-tétracarboxylique (PTCDA), comme additif conducteur de l'électricité, des nanofils de cuivre, et comme liant polymérique, du polyfluorure de vinylidène, laquelle électrode est déposée sur un collecteur de courant 5;
- une électrode négative 7 en lithium métallique, laquelle est déposée sur un collecteur de courant 9 ;
- un électrolyte imbibant un séparateur composé de deux disques superposées 11 et 15 (un disque en Celgard® et un disque en Viledon®), ledit électrolyte étant un électrolyte liquide composé d'une mélange de carbonate d'éthylène (1/3 en volume), de carbonate d'éthyle et de méthyle (1/3 en volume) et de carbonate de diméthyle (1/3 en volume) et de 1 mol/L de LiPF₆.

### a) Préparation des nanofils de cuivre

Premièrement, une solution de 2000 mL de NaOH à 15 mol.L⁻¹ est préparée dans un ballon de 3 litres en dissolvant 1200 g de NaOH dans 2000 mL d'eau désionisée (dite ci-après première solution).

En parallèle, une solution de nitrate de cuivre à 0,2 mol.L⁻¹ est préparée en ajoutant 4,65 g de Cu(NO₃)₂ dans 100 mL d'eau désionisée.

Cette solution est ajoutée à la première solution, puis 30 mL d'ethylènediamine (EDA) et 2,5 mL d'hydrazine hydratée (35 % massique) sont ajoutés.

Le milieu réactionnel est chauffé à 80°C pendant une heure sous vive agitation.

La solution passe d'une couleur bleu royal à une couleur brun rouge indiquant la formation des nanofils de cuivre métalliques.

Les nanofils sont collectés par centrifugation et lavés à l'aide d'une solution aqueuse à 3 % massique d'hydrazine et finalement ils sont stockés dans un flacon sous atmosphère d'argon contenant une solution du même type (3 % massique d'hydrazine) pour prévenir de leur oxydation.

Les nanofils de cuivre obtenus présentent un facteur de forme (lequel correspond au rapport entre la longueur et le diamètre des nanofils) supérieur à 30 avec une longueur estimée par microscopie à balayage électronique à environ 5 µm et un diamètre estimé par microscopie à balayage électronique à environ 150 nm.

### b) Préparation d' électrodes conformes à l'invention

Dans un premier temps, il est préparé une suspension comprenant des nanofils de cuivre préparés à l'étape a) susmentionnée, du polyfluorure de vinylidène (PVDF) et de la N-méthylpyrrolidone (NMP) en des teneurs massiques respectives de 1 %, 0,5 % et 98,5 %, l'ensemble étant dispersé pendant 1 heure dans un sonotrode. Puis du dianhydridepérylène-3,4,9,10-tétracarboxylique (PTCDA) et du PVDF/NMP sont ajoutés à la suspension, le mélange étant dispersé au moyen d'un dispermat. Il en résulte une encre comportant 86% massique de PTCDA, 4% massique de nanofils de cuivre et 10 % massique de polyfluorure de vinylidène (les % massiques étant exprimés par rapport à la masse totale de ces trois ingrédients).

Selon une première variante, l'encre susmentionnée est déposée sur un feuillard en cuivre puis est séchée dans une étuve à 55°C pendant 24 heures. Puis il est procédé à la découpe d'une pièce circulaire de 14 mm de diamètre à l'aide d'un emporte-pièce, ladite pièce étant ensuite séchée dans un Buchi à 80°C pendant 48 heures, la pièce résultante constituant une électrode positive (dite première électrode) déposée sur un collecteur de cuivre.

Selon une deuxième variante, l'encre susmentionnée est déposée par pulvérisation à l'aide d'un pistolet aérographe sur une plaque transparente recouvert d'un pochoir consistant en un substrat en verre revêtu d'une couche en oxyde d'indium et d'étain. La pièce résultante est ensuite séchée dans une étuve à 55°C pendant 24 heures, moyennant quoi il résulte une deuxième électrode positive.

### c) Préparation des batteries conformes à l'invention

Une première batterie conforme à l'invention est préparée à partir de la première électrode définie au paragraphe b) ci-dessus.

Plus précisément, cette première batterie est une batterie du type pile bouton, comportant respectivement :
- un disque d'électrode négative en lithium métallique ;
- la première électrode positive définie au paragraphe b) ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte composé d'une mélange de carbonate d'éthylène (1/3 en volume), de carbonate d'éthyle et de méthyle (1/3 en volume) et de carbonate de diméthyle (1/3 en volume) et de 1 mol/L de LiPF₆.

Une deuxième batterie conforme à l'invention est préparée à partir de la deuxième électrode définie au paragraphe b) ci-dessus.

Plus précisément, cette deuxième batterie est une batterie du type sachet souple (correspondant à la terminologie anglo-saxonne « Pouch Cell »), comportant respectivement :
- un disque d'électrode négative en lithium métallique ;
- la deuxième électrode positive définie au paragraphe b) ; et
- un séparateur composé de la superposition d'un disque en Viledon® (référence FS2207-25-DA WA) (qui est une membrane en fibres non tissées de polyoléfines (polypropylène/polyéthylène)) et d'un disque en Celgard® (référence C2400) (qui est une membrane en polypropylène), lequel séparateur est imbibé d'un électrolyte composé d'une mélange de carbonate d'éthylène (1/3 en volume), de carbonate d'éthyle et de méthyle (1/3 en volume) et de carbonate de diméthyle (1/3 en volume) et de 1 mol/L de LiPF₆.

Cette deuxième batterie est placée dans une enveloppe souple transparente en polyéthylène, de sorte à pouvoir visualiser les changements de couleur de l'électrode positive selon son état de charge.

On soumet cette deuxième batterie à un processus de décharge, qui, d'un point de vue de chimique, correspond à la réduction du PTCDA, et on examine pour cette batterie à travers l'enveloppe souple transparente l'évolution de couleur de l'électrode positive.

On observe, au fur et à mesure de la décharge, un passage d'une couleur rouge à un couleur beaucoup plus foncée, qui tend vers le violet.

Grâce aux électrodes et aux batteries de l'invention, il est ainsi possible de visualiser simplement l'état de charge de la batterie par simple changement de couleur de l'électrode positive.

En parallèle, les performances électrochimiques des batteries conformes à l'invention ont également été testées.

Ainsi, il a été procédé à la réalisation d'un profil de charge/décharge avec la première batterie en comparaison avec une batterie non conforme à l'invention, dans laquelle les nanofils de cuivre ont été remplacés par du noir de carbone du type Super P, les proportions d'ingrédients de l'électrode positive étant respectivement de 75% massique pour le PTCDA, 20% massique pour le noir de carbone et 5% massique pour le PVDF.

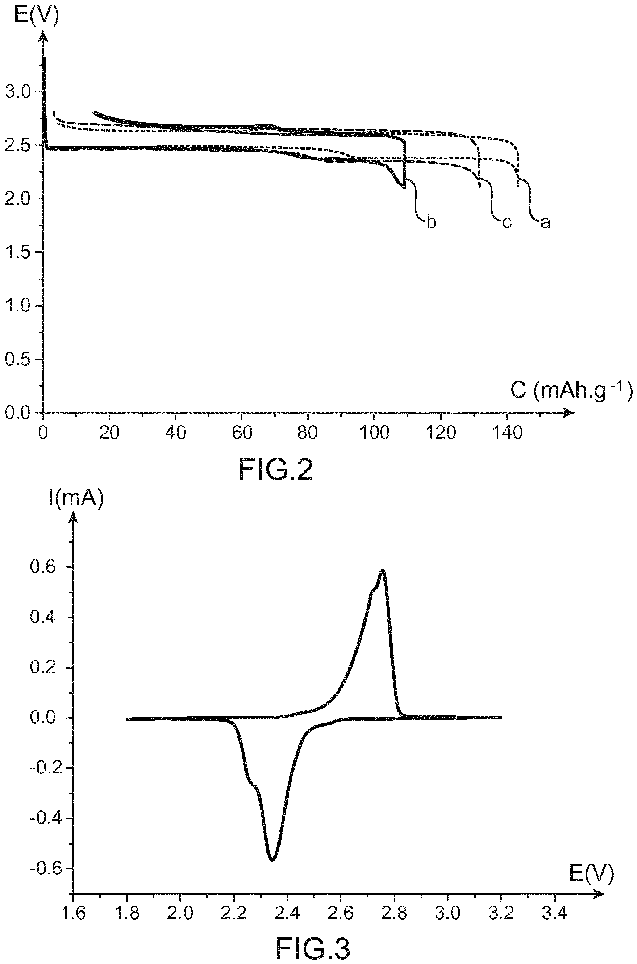

Les courbes sont reportées sur la figure 2, avec la courbe a) pour la première batterie, la courbe b) pour la deuxième batterie et la courbe c) pour la batterie non conforme à l'invention.

Elles présentent un profil relativement similaire, ce qui atteste du fait que les nanofils de cuivre ne perturbent pas les performances électrochimiques des batteries.

Il a également été procédé à la réalisation à un essai de voltampérométrie cyclique avec la première batterie, consistant à effectuer un cyclage entre 1,8 V et 3,2 V vs. Li⁺/Li⁰ à raison d'une vitesse de balayage de 0,1 mV.s⁻¹, la courbe de cyclage étant représentée sur la figure 3. L'on peut observer sur cette figure un pic de réduction à 2,8 V, qui correspond au pic de réduction de la fonction carbonyle et un pic d'oxydation à 2,3 V, ce qui correspond au pic d'oxydation des fonctions énolates ainsi créées, ces deux pics attestant de la réversibilité du PTDCA.

### EXEMPLE 2

Cet exemple illustre la préparation d'une batterie du type pile-bouton conforme à l'invention, ladite batterie comprenant :
- une électrode négative comprenant, comme matériau actif, du dianhydridepérylène-3,4,9,10-tétracarboxylique (PTCDA), comme additif conducteur de l'électricité, des nanofils de cuivre, et comme liant polymérique, du polyfluorure de vinylidène, laquelle électrode est déposée sur un collecteur de courant ;
- une électrode comprenant, comme matériau actif, du LiFePO₄, laquelle est déposée sur un collecteur de courant ;
- un électrolyte imbibant un séparateur composé de deux disques superposées (un disque en Celgard® et un disque en Viledon®), ledit électrolyte étant un électrolyte liquide composé d'une mélange de carbonate d'éthylène (1/3 en volume), de carbonate d'éthyle et de méthyle (1/3 en volume) et de carbonate de diméthyle (1/3 en volume) et de 1 mol/L de LiPF₆.

Cette batterie est préparée selon les mêmes modalités que celles exposées à l'exemple 1, si ce n'est l'électrode positive de l'exemple 1 devient l'électrode négative dans cet exemple 2 et que l'électrode positive de cet exemple 2 comprend du LiFePO₄.

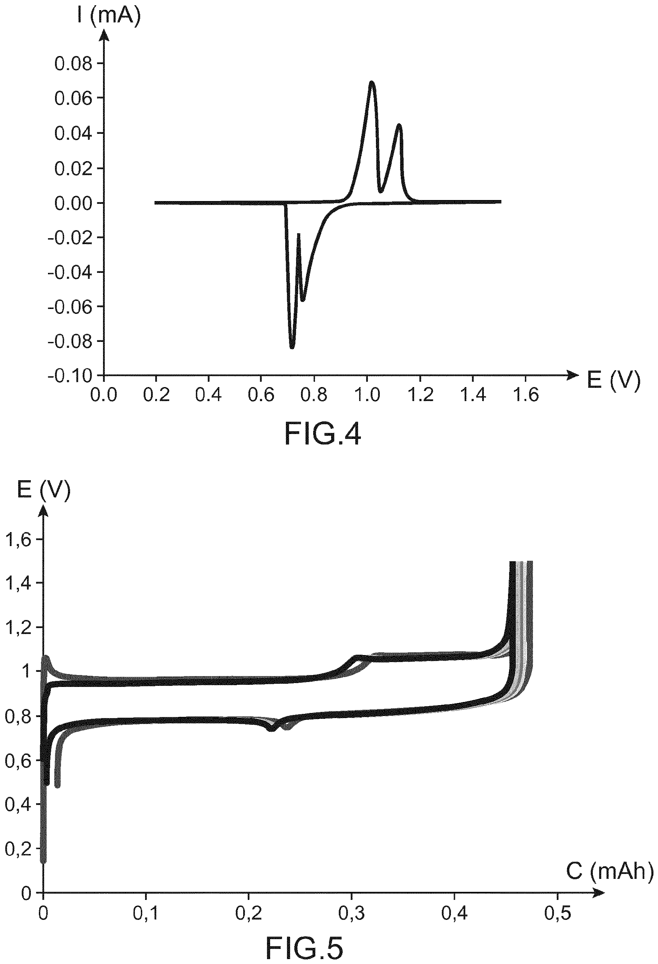

Avec cette batterie, il a été réalisé un essai de voltampérométrie cyclique, consistant à effectuer un cyclage entre 0,2 V et 1,5 V vs. Li⁺/Li⁰ à raison d'une vitesse de balayage de 0,01 mV.s⁻¹, la courbe de cyclage étant représentée sur la figure 4. L'on peut observer sur cette figure un pic de réduction à 1,8 V, qui correspond au pic de réduction de la fonction anhydride et un pic d'oxydation à 0,7 V, ce qui correspond au pic d'oxydation des fonctions carboxylates ainsi créées, ces deux pics attestant de la réversibilité du PTDCA.

Il a également été procédé à la réalisation d'un profil de charge/décharge avec un régime de C/10 avec cette batterie, 5 cycles de charge/décharge ayant été effectués, les courbes de 5 cycles étant reportées sur la figure 5. Ces courbes se superposent, ce qui atteste de la stabilité de la batterie.

### EXEMPLE 3

Cet exemple illustre la préparation d'une batterie du type pile-bouton conforme à l'invention, ladite batterie comprenant :
- une électrode positive comprenant, comme matériau actif, du Li₄Ti₅O₁₂, comme additif conducteur de l'électricité, des nanofils de cuivre, et comme liant polymérique, du polyfluorure de vinylidène, laquelle électrode est déposée sur un collecteur de courant ;
- une électrode négative en lithium métallique, laquelle est déposée sur un collecteur de courant ;
- un électrolyte imbibant un séparateur composé de deux disques superposées (un disque en Celgard® et un disque en Viledon®), ledit électrolyte étant un électrolyte liquide composé d'une mélange de carbonate d'éthylène (1/3 en volume), de carbonate d'éthyle et de méthyle (1/3 en volume) et de carbonate de diméthyle (1/3 en volume) et de 1 mol/L de LiPF₆.

Le matériau actif Li₄Ti₅O₁₂ est un matériau électrochrome apte à passer d'une couleur blanche à une couleur bleue foncée en fonction de son état de charge.

Cette batterie est préparée selon les mêmes modalités que celles exposées à l'exemple 1, si ce n'est qu'il a fallu préparer l'électrode positive selon le protocole suivant.

Une solution contenant les nanofils de cuivre, du poly(fluorure de vinylidène) fluorure (PVdF) et la N-méthylpyrrolidone (NMP) a été préparée par dispersion avec une sonotrode pendant 1heure, cette solution comprenant 1% massique de nanofils de cuivre, 0,5 % massique de PVDF et 98,5 % massique NMP. Puis du Li₄Ti₅O₁₂ est ajouté et le mélange est dispersé au dispermat. L'encre colorée ainsi obtenue a une composition d'environ 90% de Li₄Ti₅O₁₂, 4% de nanofils de cuivre et 6 % PVdF. Cette encre a été enduite sur collecteurs de cuivre, puis séchée dans une étuve à 55°C pour 24 heures. Une électrode de 14 mm de diamètre a été découpée à l'aide d'un emporte-pièce puis séchée dans un Buchi à 80°C pour 48 heures.

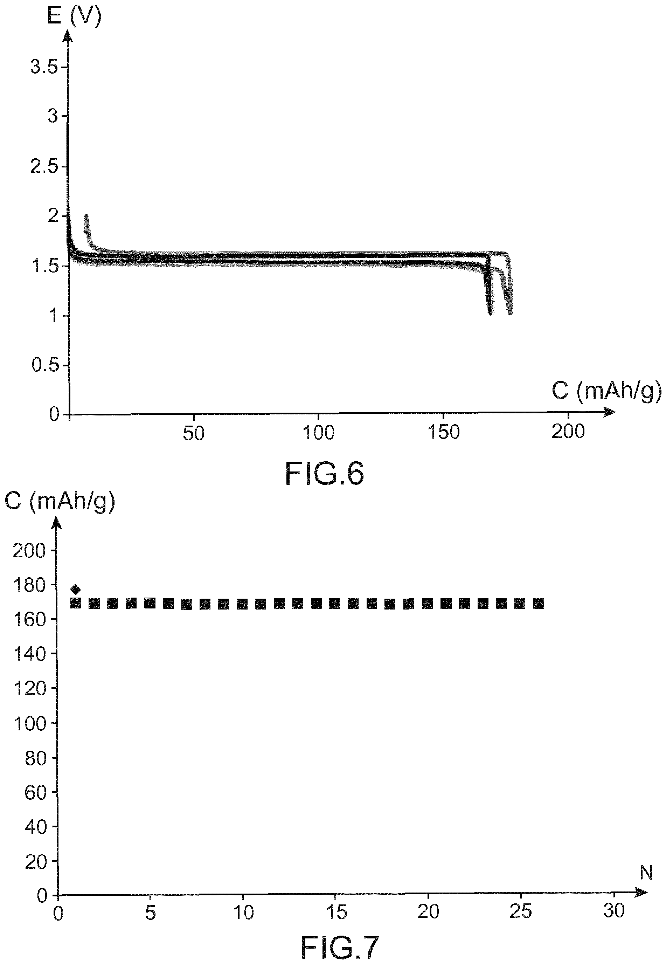

Avec cette batterie, il a également été procédé à la réalisation d'un profil de charge/décharge avec un régime de C/10 avec cette batterie, 5 cycles de charge/décharge ayant été effectués, les courbes de 5 cycles étant reportées sur la figure 6. Ces courbes se superposent, ce qui atteste de la stabilité de la batterie.

Il a également été procédé à la détermination de l'évolution de la capacité spécifique C (en mAh/g) en fonction du nombre de cycles N, les résultats étant reportés sur la figure 7. Il ressort que la capacité spécifique reste sensiblement constante au cours de 25 cycles mis en œuvre.

## Revendications

1. Electrode pour dispositif de stockage d'énergie comprenant, comme matériau actif, un matériau électrochrome et comme additif conducteur de l'électricité, des nanofils métalliques, qui est déposée sur un substrat transparent.

2. Electrode selon la revendication 1, dans laquelle le matériau électrochrome est un composé organique.

3. Electrode selon la revendication 1 ou 2, dans laquelle le matériau électrochrome est un composé organique comprenant au moins un groupe accepteur d'électrons.

4. Electrode selon l'une quelconque des revendications précédentes, dans laquelle le matériau électrochrome est un composé aromatique, tel qu'un composé pérylène, comprenant au moins un groupe accepteur d'électrons.

5. Electrode selon la revendication 3 ou 4, dans laquelle le groupe accepteur d'électrons est un groupe carbonyle.

6. Electrode selon la revendication 1 ou 2, dans laquelle le matériau électrochrome est un composé organique comportant au moins un groupe donneur d'électrons.

7. Electrode selon la revendication 1, 2 ou 6, dans laquelle le matériau électrochrome est un composé aromatique, tel qu'un composé pérylène ou phénylène, comportant un groupe donneur d'électrons, qui est un groupe carboxylate.

8. Electrode selon l'une quelconque des revendications précédentes, dans laquelle les nanofils métalliques sont des nanofils en métal choisi parmi le cuivre, le nickel, l'argent, l'or, le platine, le titane, le palladium, le zinc, l'aluminium et les alliages de ceux-ci.

9. Electrode selon l'une quelconque des revendications précédentes, dans laquelle les nanofils métalliques présentent un facteur de forme, correspondant au rapport de la longueur du nanofil sur son diamètre, allant de 10 à 1000000.

10. Electrode selon l'une quelconque des revendications précédentes, qui comprend un liant polymérique.

11. Electrode selon la revendication 1 ou 2, dans laquelle le matériau électrochrome est un matériau inorganique, tel qu'un matériau inorganique choisi parmi le graphite, le TiO₂ sous forme bronze, un oxyde de vanadium, un oxyde mixte de lithium et de titane, un phosphate de lithium.

12. Dispositif de stockage d'énergie comprenant au moins une cellule électrochimique comprenant deux électrodes de polarité opposée, respectivement une électrode positive et une électrode négative, séparées par un électrolyte, l'une au moins des électrodes étant une électrode telle que définie selon l'une quelconque des revendications 1 à 11.

13. Dispositif selon la revendication 12, qui est une batterie au lithium.

14. Dispositif selon selon la revendication 12 ou 13, qui est conditionné dans une enveloppe transparente.

15. Utilisation de nanofils métalliques dans une électrode pour dispositif de stockage d'énergie comprenant, comme matériau actif, un matériau électrochrome, pour visualiser l'état de charge de ladite électrode par changement de couleur de celle-ci.

## Patentansprüche

1. Elektrode für eine Energiespeicher-Vorrichtung, umfassend als aktives Material ein elektrochromes Material und als elektrisch leitenden Zusatz Metall-Nanodrähte, die auf einem transparenten Substrat aufgebracht ist.

2. Elektrode nach Anspruch 1, wobei das elektrochrome Material eine organische Verbindung ist.

3. Elektrode nach Anspruch 1 oder 2, wobei das elektrochrome Material eine organische Verbindung ist, die mindestens eine Elektronenakzeptor-Gruppe umfasst.

4. Elektrode nach einem der vorhergehenden Ansprüche, wobei das elektrochrome Material eine aromatische Verbindung ist, beispielsweise eine Perylen-Verbindung, welche mindestens eine Elektronenakzeptor-Gruppe umfasst.

5. Elektrode nach Anspruch 3 oder 4, wobei die Elektronenakzeptor-Gruppe eine Carbonylgruppe ist.

6. Elektrode nach Anspruch 1 oder 2, wobei das elektrochrome Material eine organische Verbindung mit mindestens einer Elektronendonor-Gruppe ist.

7. Elektrode nach Anspruch 1, 2 oder 6, wobei das elektrochrome Material eine aromatische Verbindung ist, beispielsweise eine Perylen- oder Phenylen-Verbindung, welche eine Elektronendonor-Gruppe umfasst, die eine Carboxylatgruppe ist.

8. Elektrode nach einem der vorhergehenden Ansprüche, wobei die Metall-Nanodrähte Nanodrähte aus einem Metall sind, welches ausgewählt ist aus Kupfer, Nickel, Silber, Gold, Platin, Titan, Palladium, Zink, Aluminium und Legierungen daraus.

9. Elektrode nach einem der vorhergehenden Ansprüche, wobei die Metall-Nanodrähte einen Formfaktor von 10 bis 1000000 aufweisen, der dem Verhältnis der Länge des Nanodrahts zu seinem Durchmesser entspricht.

10. Elektrode nach einem der vorhergehenden Ansprüche, die ein polymeres Bindemittel umfasst.

11. Elektrode nach Anspruch 1 oder 2, wobei das elektrochrome Material ein anorganisches Material ist, beispielsweise ein anorganisches Material, welches ausgewählt ist aus: Graphit, TiO₂ in Bronze-Form, einem Vanadiumoxid, einem Mischoxid von Lithium und Titan, einem Lithiumphosphat.

12. Energiespeicher-Vorrichtung, umfassend mindestens eine elektrochemische Zelle mit zwei Elektroden entgegengesetzter Polarität, jeweils einer positiven Elektrode und einer negativen Elektrode, die durch einen Elektrolyten getrennt sind, wobei mindestens eine der Elektroden eine Elektrode gemäß einem der Ansprüche 1 bis 11 ist.

13. Vorrichtung nach Anspruch 12, die eine Lithiumbatterie ist.

14. Vorrichtung nach Anspruch 12 oder 13, die in einer transparenten Hülle verpackt ist.

15. Verwendung von Metall-Nanodrähten in einer Elektrode für eine Energiespeicher-Vorrichtung, die als aktives Material ein elektrochromes Material umfasst, um den Ladezustand der Elektrode durch Farbänderung derselben sichtbar zu machen.

## Claims

1. Electrode for energy storage device comprising an electrochromic material as active material and metal nanowires as electricity conducting additive, that is deposited on a transparent substrate.

2. The electrode according to claim 1, wherein the electrochromic material is an organic compound.

3. The electrode according to claim 1 or 2, wherein the electrochromic material is an organic compound comprising at least one electron acceptor group.

4. The electrode according to any of the preceding claims, wherein the electrochromic material is an aromatic compound, such as a perylene compound, comprising at least one electron acceptor group.

5. The electrode according to claim 3 or 4, wherein the electron acceptor group is a carbonyl group.

6. The electrode according to claim 1 or 2, wherein the electrochromic material is an organic compound comprising at least one electron donor group.

7. The electrode according to claim 1, 2 or 6, wherein the electrochromic material is an aromatic compound, such as a perylene or phenylene compound, comprising an electron donor group which is a carboxylate group.

8. The electrode according to any of the preceding claims, wherein the metal nanowires are nanowires in a metal selected from among copper, nickel, silver, gold, platinum, titanium, palladium, zinc, aluminium, and alloys thereof.

9. The electrode according to any of the preceding claims, wherein the metal nanowires have a form factor corresponding to the ratio between the length and diameter of the nanowire ranging from 10 to 1000000.

10. The electrode according to any of the preceding claims, that comprises a polymeric binder.

11. The electrode according to claim 1 or 2, wherein the electrochromic material is an inorganic material, such as an inorganic material selected from among graphite, TiO₂ in bronze form, a vanadium oxide, a mixed lithium and titanium oxide, a lithium phosphate.

12. Energy storage device comprising at least one electrochemical cell comprising two electrodes of opposite polarity, respectively a positive electrode and negative electrode separated by an electrolyte, at least one of the electrodes being an electrode such as defined in any of claims 1 to 11.

13. The device according to claim 12, that is a lithium battery.

14. The device according to claim 12 or 13 packaged in a transparent casing.

15. Use of metal nanowires in an electrode for energy storage device comprising an electrochromic material as active material to view the charge status of said electrode via a change in colour thereof.
